# EUROPEAN PATENT SPECIFICATION

(11) **EP 2 811 045 B1**
(45) Date of publication and mention of the grant of the patent: **07.11.2018**
(21) Application number: 13743777.8
(22) Date of filing: 28.01.2013
(51) Int. Cl.: C22C 38/00, B23K 20/04, C21D 9/00, C22C 38/14, C22C 38/58

(54) **BASE METAL FOR HIGH-TOUGHNESS CLAD STEEL PLATE GIVING WELD WITH EXCELLENT TOUGHNESS, AND PROCESS FOR PRODUCING SAID CLAD STEEL PLATE**
BASISMETALL FÜR EINE HOCHZÄHE PLATTIERTE STAHLPLATTE VON HERVORRAGENDER SCHWEISSBESTÄNDIGKEIT SOWIE VERFAHREN ZUR HERSTELLUNG DIESER PLATTIERTEN STAHLPLATTE
MÉTAL DE BASE POUR UNE PLAQUE D'ACIER PLAQUÉE À HAUTE TÉNACITÉ DONNANT UNE SOUDURE AYANT UNE EXCELLENTE TÉNACITÉ ET PROCÉDÉ DE FABRICATION DE LADITE PLAQUE D'ACIER PLAQUÉE

(30) Priority: 30.01.2012 JP 2012016071; 10.12.2012 JP 2012268909
(43) Date of publication of application: 10.12.2014
(73) Proprietor: JFE Steel Corporation, Tokyo 100-0011 (JP)
(72) Inventor: TACHIBANA, Shunichi, Tokyo 100-0011 (JP); YAZAWA, Yoshihiro, Tokyo 100-0011 (JP); KISHI, Keiichiro, Tokyo 100-0011 (JP); KURONUMA, Yota, Tokyo 100-0011 (JP); HOSHINO, Toshiyuki, Tokyo 100-0011 (JP); NISHIMURA, Kimihiro, Tokyo 100-0011 (JP); SUEYOSHI, Hitoshi, Tokyo 100-0011 (JP)
(74) Representative: Hoffmann Eitle
(86) International application number: PCT/JP2013/000437
(87) International publication number: WO 2013/114851

(56) References cited:
- EP-A1- 0 586 703
- EP-A2- 1 726 675
- JP-A- S6 043 433
- JP-A- S6 043 433
- JP-A- S6 043 465
- JP-A- H03 229 819
- JP-A- H05 261 568
- JP-A- S59 232 226
- JP-A- S59 232 226
- JP-A- 2008 030 086
- RINZO KAYANO ET AL.: 'Tennen Gas Yusokan'yo Kojinsei Clad Kohan no Kaihatsu' MATERIA vol. 46, no. 1, 01 January 2007, JAPAN, pages 46 - 48, XP008172346
- M.K.GRAF ET AL.: 'Production of large diameter linepipe for the transportation of highly corrosive crude oil and natural gas' LA REVUE DE METALLURGIE vol. 90, no. 10, October 1993, pages 1323 - 1332, XP000417737

## Description

### [Technical Field]

The present invention relates to a base metal for a high-toughness clad plate having excellent toughness at a welded joint and a method for manufacturing the clad plate.

### [Background Art]

In recent years, because of energy issues, energy resource development has been pursued even in regions called difficult to mine environments where mining has been considered impossible. Such environments are particularly highly corrosive and require application of high-alloy clad steels that have higher corrosion resistance. Moreover, in a difficult-to-mine environment, industrial facilities and structures are required to achieve durability and long life, and be maintenance-free; accordingly, Ni-based alloys or Ni alloys such as those represented by Alloy 625 and 825 are attracting much attention as the materials that satisfy such requirements.

The price of the main raw material of Ni alloys, i.e., Ni, and the alloy elements such as Mo and Cr may rise steeply or undergo significant fluctuation from time to time. Accordingly, clad steels that can more economically achieve high corrosion resistance of high alloy steels than when solid metals (cases where the metal composition of the cladding material is achieved throughout the entire thickness) are used have drawn much attention recently.

A high-alloy clad steel is a steel material constituted by bonding two types of metals having different properties, i.e., a Ni-based alloy or Ni-alloy-based steel as a cladding material and a low-alloy steel as a base metal. A clad steel is prepared by metallurgically joining different types of metals. Unlike plated materials, clad steels do not undergo separation and can exhibit various novel properties that cannot be achieved by single metals and alloys.

Clad steels can have functions comparable to those of solid metals if cladding materials that have functions suited for the purpose for each operating environment are selected. Moreover, carbon steels and low-alloy steels that are suited for use in severe environments because of their high toughness and high strength other than corrosion resistance can be used as the base metal of clad steels.

Since clad steels use less alloy elements than solid metals and can reliably exhibit corrosion resistance comparable to that of solid metals while ensuring strength and toughness comparable to those of carbon steels and low-alloy steels, both economical efficiency and functionality can be achieved.

Accordingly, clad steels that use high-alloy cladding materials are considered to be very useful functional steel materials and the need therefor has increased in various industrial fields in recent years.

Clad steels have different usages depending on the cladding materials and manufacturing methods therefor are also different. As the base metal of clad plates, low-carbon low-alloy steels to which minute amounts of alloy components such as Nb and V or Ti and B are added are sometimes used. Such low-carbon low-alloy steels are manufactured by particular quenching tempering (hereinafter also referred to as "refining") or through controlled rolling during hot rolling (thermo mechanical control process (TMCP)).

In manufacturing clad steel pipes by tubing clad steels, steel plates are formed into pipe shapes and one pass of high efficiency welding is performed on each of the two surfaces of the pipes.

In general, in multilayer welding, the boundary between a weld metal and a steel plate to be welded (this is called "base metal" as a welding term but when the steel plate needs to be distinguished from the base metal of a clad plate, it is referred to as "steel plate to be welded" or "base metal (B.M.)" hereinafter) and a heat affected zone (HAZ) of the base metal (B.M.) undergo grain refining by the influence of the heat from the next pass; however, in single-pass welding, the crystal grains at the boundary between the base metal (B.M.) and the weld metal (hereinafter referred to as "weld bonded zone") and in the HAZ are coarse, resulting in low toughness.

For example, when operation of pipelines is stopped for emergency, various parts of pipes are put in a low-temperature environment at -40°C. Thus, the Charpy impact absorption energy at -40°C (vE-40°C) of the base metals (B.M.) and HAZ is beginning to feature 35 (J) or more. Moreover, base metals (B.M.) are also required to feature 85% or higher percent ductile fracture (85% shear area transition temperature (SATT)) in a drop weight tear test (DWTT) at -20°C conducted to confirm the brittle fracture arrest temperature. Accordingly, extensive investigations have been conducted.

According to the methods disclosed in Patent Literatures 1 and 2, the toughness of welded joints are improved by optimizing the amounts of Ti and N added. However, since TiN is mainly formed during solidification of the steel, TiN tends to form coarse precipitates. Accordingly, when TiN generated remains without forming solid solutions, a pinning effect occurs in which coarsening of the microstructure in the HAZ heated to high temperatures is suppressed. However, in the HAZ heated to near 1000°C, TiN remains coarse and has little pinning effects and thus there is a problem in that coarsening of the microstructure in that region is not sufficiently suppressed and the HAZ toughness is low.

Moreover, when the maximum temperature exceeds 1400°C such as in the vicinity of the weld bonded zones, nearly all of TiN forms solid solutions. Thus, in the regions near the weld bonded zones, there is a problem in that the pinning effect of TiN is little and thus toughness cannot be sufficiently achieved.

In Non-Patent Literature 1, examples manufactured on the basis of the aforementioned two documents (Patent Literatures 1 and 2) are disclosed. However, Non-Patent Literature 1 makes no mention of regions in which the pinning effects of TiN are not sufficiently obtained.

Patent Literature 3 discloses a technique of refining austenite grains in the HAZ and improving the toughness by allowing fine TiN to precipitate in the steel by addition of Ti, N, Nb, V, and B to C, Si, Mn, and Al. However, the method disclosed in Patent Literature 3 requires an additional step of re-heating at a temperature of 1150°C or less and this increases the production cost and poses a problem for industrial implementation.

It should be noted that in the description below, the portion other than the cladding material in a clad plate in a state of use is referred to as "base metal of a clad plate" or simply "base metal", and a base metal used in an early stage of a process for manufacturing a clad plate is referred to as "base metal raw material" to make distinction as needed.

### [Citation List]

### [Patent Literature]

[PTL 1] Japanese Unexamined Patent Application Publication No. 2004-149821
[PTL 2] Japanese Unexamined Patent Application Publication No. 2006-328460
[PTL 3] Japanese Examined Patent Application Publication No. 55-261 64
[EP1] European Patent Application EP 0 586 703 A1

### [Non Patent Literature]

[NPL 1] Japan Steel Works Technical Review No. 55 (2004), pp. 77-78

### [Summary of Invention]

### [Technical Problem]

The present invention provides a base metal for a high-toughness clad plate having excellent toughness at a welded joint by composite addition of alloy elements and a method for manufacturing the clad plate.

### [Solution to Problem]

Under the above-described circumstances, the inventors have focused on the fact that in a base metal for a clad plate, TiN alone is not sufficient to improve the HAZ toughness and have shown that the toughness of the base metal and the HAZ of the clad plate can be simultaneously improved by clarifying the behavior of the precipitates.

In particular, the inventors have found that V, the addition of which has been considered essential to adjust the strength in the related art, dissolves in steel at about 900°C and excessively increases the quenching property, thereby degrading the HAZ toughness due to hardening. Thus, in designing the composition of the base metal of the clad steel, the inventors have decided not to add V. Moreover, in order to suppress the decrease in HAZ toughness of the base metal of a clad steel heated to a temperature range of about 1000°C, the precipitation amount and morphology of TiN and NbC have been optimized so as to suppress coarsening of the γ grain diameter during heating.

The inventors have found that in this manner, a base metal of a clad plate having excellent low-temperature toughness can be obtained in a heat affected zone (HAZ) by single-pass welding. The thickness of the base metal is preferably 50 mm or less. In a manufacturing method of the present invention, low-temperature toughness of the weld bonded zone, heat affected zone, and base metal after single-pass welding is reliably achieved by composite addition of alloy elements and a refining treatment, which made it possible to provide a base metal for a high-toughness clad plate having excellent toughness at a welded joint.

Based on the new findings described above and further studies, the inventors have found the following optimum composition and made the invention.

In other words, the invention of a base metal for a clad plate having excellent toughness at a welded joint addressing the problems described above according to the present invention is as follows.
[1] A base metal for a high-toughness clad plate having excellent toughness at a welded joint, the base metal including, in terms of mass%, C: 0.030 to 0.10%, Si: 0.10 to 0.30%, Mn: 1.00 to 1.60%, P: 0.015% or less, S: 0.003% or less, V: less than 0.010%, Mo: 0.05 to 0.50%, Nb: 0.010 to 0.060%, Ti: 0.005 to 0.020%, N: 0.0030 to 0.0060% and at least one selected from Al: 0.040% or less and Ca: 0.0010 to 0.0040%, and optionally at least one selected from Ni: 1.00% or less, Cu: 1.00% or less, and Cr: 1.00% or less, the balance being Fe and unavoidable impurities, wherein a percent ductile fracture is 85% or more in a -20°C DWTT test and vE-20°C is 100 J or more at a HAZ 3 mm position, and wherein the ratio of the Ti content to the N content, Ti/N, is within the range of 2.0 to 3.5 and the ratio of the Nb content to the C content, Nb/C, is within the range of 0.2 to 2.0 where the element symbols represent contents of respective elements in terms of mass%.
[2] The base metal for a high-toughness clad plate having excellent toughness at a welded joint according to [1], further including, in terms of mass%, at least one selected from Ni: 1.00% or less, Cr: 1.00% or less, and Cu: 1.00% or less.
[3] A method for manufacturing a clad plate having excellent toughness at a welded joint, comprising conducting clad rolling by using a steel material having the chemical composition described in [1] and a cladding material, conducting a quenching treatment of heating the resulting clad-rolled plate to 900 to 1100°C, and then tempering the resulting quenched plate at a temperature lower than 550°C, in which a base metal of the clad plate exhibits a percent ductile fracture of 85% or more in a -20° DWTT test and vE-20°C of 100 J or more at a HAZ 3 mm position.
[4] A clad plate comprising a base metal which is the base metal according to [1].

### [Advantageous Effects of Invention]

According to the present invention, the content of V which causes deterioration of the HAZ toughness is reduced as much as possible and appropriate amounts of Nb, Al, Ti, and N are added to make crystal grains of a base metal of a clad steel to be ultrafine. Thus, coarsening of crystal grain size can be suppressed and excellent low-temperature toughness can be achieved in a base metal and a heat-affected zone generated in single-pass welding.

### [Description of Embodiments]

The limitation ranges of the components in the present invention will now be described in detail. For each element, "%" means mass% unless otherwise noted.

### C: 0.030 to 0.10%

Carbon (C) is a component effective for improving the strength of steels. The C content is 0.030% or more since strength required for steel materials for general welding cannot be obtained at a C content less than 0.030%. In contrast, excessive addition of C results in deterioration of toughness of steel materials and heat affected zones and the decrease in C content is preferred from the viewpoint of weldability. Accordingly, the upper limit of the C content is 0.10%. From the viewpoints of weldability and HAZ toughness, the upper limit is preferably 0.08%.

### Si: 0.10 to 0.30%

Silicon (Si) is added for deoxidation during steel making and is a component needed to ensure strength of the base metal. Thus, the Si content needs to be 0.10% or more. In contrast, excessive addition of Si results in degradation of the toughness of weld heat affected zones and weldability. Thus, the upper limit of the Si content is 0.30%. From the viewpoints of deoxidizing effects and HAZ toughness, weldability and deoxidizing effect, the lower limit is preferably 0.13% and the upper limit is preferably 0.20%.

### Mn: 1.00 to 1.60%

Manganese (Mn) is a component effective for ensuring the strength and toughness of the base metal and Mn content of 1.00% or more is needed. Considering the toughness of the weld heat affected zones and weldability, the upper limit is 1.60%. From the viewpoints of the toughness of the base metal and the HAZ toughness, the lower limit is preferably 1.00% and the upper limit is preferably 1.30%.

### P: 0.015% or less

In order to ensure the toughness in the base metal and the weld heat affected zones, the P content is preferably as low as possible. However, since excessively removing P will increase the cost, the upper limit of the P content is 0.015%.

### S: 0.003% or less

Sulfur (S) is an inevitable element as an impurity in the steel. In order to achieve the toughness at a welded joint according to the present invention, the S content needs to be 0.003% or less.

### V: less than 0.010%

Vanadium (V) is an element that should draw most attention in the present invention. The V content needs to be as low as possible. Conventionally, V has been intentionally added to achieve precipitation strengthening caused by fine precipitates such as VC and VN. However, when a step of quenching by conducting heating at 900°C or higher is included in the process of manufacturing the clad steel of the present invention, fine precipitates such as VC and VN become dissociated and dissolved during heating. This phenomenon occurs because fine precipitates such as VC and VN have a property to dissolve in the steel at low temperature in the C content range of the present invention. Accordingly, V added tends not to remain as fine precipitates and becomes dissociated during heating, acts as a quenching element, and causes significant hardening in both the base metal and HAZ, thereby deteriorating toughness. The deterioration of toughness becomes notable when the V content is 0.010% or more. Thus, the V content is limited to less than 0.010%. More preferably, the V content is less than 0.004% and preferably zero on an industrially applicable level. In order to further enhance the strength and toughness, at least one selected from Al or Ca is to be contained.

### Mo: 0.05 to 0.50%

Molybdenum (Mo) is an element that stably improves the strength and toughness of the base metal after a quenching treatment. At a Mo content less than 0.05%, this effect is not achieved. In contrast, at a Mo content more than 0.50%, the effect is saturated and excessive incorporation adversely affect the toughness of the weld heat affected zones and weldability. Thus, the Mo content is in the range of 0.05 to 0.50% and preferably in the range 0.08 to 0.20%.

### Nb: 0.010 to 0.060%

Niobium (Nb) is effective for refining the crystal grains by forming NbC and contributes to improving the toughness of HAZ and the base metal subjected to a quenching tempering treatment as in the present invention. However, such an effect is exhibited only when the Nb content is 0.010% or more. At a Nb content more than 0.060%, not only this effect is no longer achieved but also surface defects readily occur on the steel ingot. Accordingly, the Nb content is in the range of 0.010 to 0.060% and preferably in the range of 0.025 to 0.050% for the same reason.

### Ti: 0.005 to 0.020%

Titanium (Ti) forms TiN, suppresses grain growth in the weld heat affected zones or during slab heating, and as a result has an effect of improving toughness due to refining of the microstructure. At a Ti content less than 0.005%, such an effect is little and at a Ti content exceeding 0.020%, deterioration of the toughness of the weld heat affected zone occurs. The Ti content is in the range of 0.005 to 0.020% and preferably in the range of 0.010 to 0.016% for the same reason.

### Al: 0.040% or less

Aluminum (Al) is an effective element as a deoxidizer. At an Al content exceeding 0.040%, toughness is degraded. Thus, when Al is to be contained, the Al content is preferably 0.040% or less and more preferably less than 0.015% for the same reason.

### Ca: 0.0010 to 0.0040%

Calcium (Ca) controls the morphology of sulfide-based inclusions, improves the toughness of the weld heat affected zones, and is effective in controlling the morphology of MnS, thereby improving the impact value. Moreover, Ca improves the resistance to hydrogen-induced cracking. The Ca content at which such an effect is exhibited is 0.0010% or more. However, at a Ca content exceeding 0.0040%, the effect is saturated and the cleanliness and the toughness of the weld heat affected zone are deteriorated. Thus, when Ca is to be contained, the C content is preferably in the range of 0.0010 to 0.0040% and more preferably in the range of 0.0020 to 0.0030% for the same reason.

### N: 0.0030 to 0.0060%

Nitrogen (N) precipitates by forming TiN and has an effect of improving the HAZ toughness. However, at a N content less than 0.0030%, the effect is little. At a N content exceeding 0.0060%, the amount of solid solution N increases and the HAZ toughness is decreased. The N content is in the range of 0.0030 to 0.0060% in order for the N content to match with the Ti content and considering the improvement of the HAZ toughness by precipitation of fine TiN. Preferably the N content is in the range of 0.0030 to 0.0040%.

In the present invention, at least one selected from Ni, Cr, and Cu is preferably contained optionally and selectively in the range described below in addition to the above-described components.

### Ni: 1.00% or less

Nickel (Ni) is one of the elements effective for improving the toughness and increasing the strength. At a Ni content exceeding 1.00%, the effect is saturated. Moreover, since incorporation of Ni increases the production cost, the upper limit is preferably 1.00% when Ni is to be contained.

### Cr: 1.00% or less

Chromium (Cr) is one of the elements effective for improving the toughness and increasing the strength. However, excessive incorporation may deteriorate the toughness of the weld heat affected zone. The Cr content is thus 1.00% or less when Cr is to be contained.

### Cu: 1.00% or less

Copper (Cu) is one of the elements effective for improving the toughness and increasing the strength. However, excessive incorporation may deteriorate the weldability. Accordingly, the upper limit of the Cu content is 1.00% when Cu is to be contained.

### Ti/N: 2.0 to 3.5

Titanium (Ti) and nitrogen (N) form TiN as mentioned above, and are elements important for improving the toughness of the HAZ. In order to sufficiently achieve this effect, the relationship between the contents of the two elements is also important. In other words, when Ti/N is less than 2.0 in terms of mass%, the crystal grains become coarse and the toughness may be significantly degraded. When Ti/N exceeds 3.5, the toughness may decrease due to the same reason. Accordingly, Ti/N is in the range of 2.0 to 3.5.

### Nb/C: 0.2 to 2.0

Niobium (Nb) and carbon (C) have an effect of refining crystal grains by forming NbC and contribute to improving toughness during the quenching tempering treatment conducted as in the present invention. However, this effect is exhibited at Nb/C of 0.2 or more and no longer exhibited at Nb/C exceeding 2.0. Accordingly, the range of Nb/C in terms of mass% ratio is 0.2 to 2.0, preferably 0.3 to 1.9, and more preferably 0.3 to 1.8. DWTT test: Percent ductile fracture of 85% or more at -20°C

A DWTT test is a test frequently employed in evaluating brittle crack propagation of pipelines etc., and is a test for evaluating the toughness of a plate having a thickness close to that used in the real operation environment of pipelines. In the present invention, the percent ductile fracture is to be 85% or more at a testing temperature of -20°C in a DWTT test conducted according to API-5L employed as an API standard. The evaluation is conducted at a severe temperature of -20°C by considering the operation limit in cold districts for the actual thickness. This setting is employed since if the percent ductile fracture is 85% or more at this temperature, brittle crack propagation can be expected to be prevented in an actual environment at -20°C. Charpy impact test: vE-20°C of 100 J or more at HAZ 3 mm

The Charpy impact absorption energy (vE-20°C) at -20°C in the HAZ determined by a Charpy impact test set forth in JIS Z 2242 is to be 100 J or more. In order to ensure toughness that can reliably achieve appropriate safety in cold districts or in the event of emergency shutdown of pipeline operation, the Charpy impact absorption energy value at -20°C was defined to be 100 J. Since the HAZ 3 mm region is a region that has particularly poor toughness when the plate is used in a structure such as a pipe and is particularly important for achieving appropriate safety, the test is conducted in that limited region.

### Manufacturing method

The base metal raw material of the clad steel of the present invention is adjusted to the composition ranges described above and can be prepared by a common method or the like. The raw material of the cladding material is selected according to the usage and the base metal raw material is clad-rolled into a clad plate.

For use in pipelines of natural gas etc., high alloys such as Alloy 625 and 825 can be used as the cladding material, for example. Note that the thickness of the base metal raw material of the clad steel is preferably 50 mm or less. When the thickness of the base metal raw material is 25 mm or more, the cladding material and the base metal raw material are superposed on each other and rolled as one pair. When the thickness of the base metal raw material is less than 25 mm, two pairs can be superposed onto each other and rolled. In the present invention, the conditions for clad rolling are not particularly limited and common methods may be employed.

A clad plate obtained as above is heated to a temperature in the range of 900 to 1100°C for a quenching treatment. When the quenching treatment is conducted at less than 900°C, the strength of the base metal is not sufficient. At exceeding 1100°C, the toughness of the base metal is deteriorated. Accordingly, heating is conducted in the range of 900 to 1100°C for the quenching treatment, and more preferably 900 to 980°C. The time taken for the quenching treatment is preferably 10 to 30 minutes although this depends on the thickness of the clad plate. However, holding a high temperature for a long time may generate precipitates in the cladding material depending on the type of the cladding material and thus the time may be shorter than 10 minutes. The cooling for the quenching treatment may be conducted by water cooling or oil cooling (for example, at a cooling rate of 2°C/s or more).

Then a tempering treatment is conducted by heating at a temperature lower than 550°C. Since the DWTT properties are deteriorated at 550°C or higher, the temperature is limited to lower than 550°C. The tempering treatment temperature is preferably within the range of 420 to 500°C. The tempering heating time is, for example, 5 to 35 minutes.

The base metal of the clad plate can be refined by the series of the refining treatment described above.

The clad plate can be formed into steel pipes as is and used as clad steel pipes. During welding, the clad plate can be welded by performing one pass of welding on each surface. Despite single pass welding, a fine microstructure can be retained in the HAZ and excellent toughness can be ensured.

### [Examples]

The examples of the present invention will now be compared with comparative examples and described. Here, the toughness at a welded joint was evaluated through a Charpy test. The position of the notch of a Charpy specimen was 3 mm away from the bonded portion, i.e., the boundary between the weld metal and the base metal, toward the base metal side (HAZ 3 mm). The test temperature was -20°C. In the present invention, specimens exhibiting an absorption energy of 100 J or more at -20°C (vE-20°C) were rated as having excellent toughness.

The toughness of the base material was evaluated by a DWTT test (drop weight properties) at -20°C. In the present invention, specimens exhibiting a percent ductile fracture of 85% or more in the DWTT test at -20°C were rated as having excellent toughness as a base metal.

Clad steel plates were manufactured by using the base metals having chemical compositions shown in Table 1 and Alloy 625. For the manufacturing conditions, a base metal and a cladding material were superposed on each other to form a pair and the pair was heated in a heating furnace to 1150°C and hot-rolled so as to form a clad plate constituted by a base metal with a thickness of 30 mm and a cladding material with a thickness of 3 mm. After completion of rolling, the plate was heated to 910°C to perform a quenching treatment and then cooled with water. Then a tempering treatment was conducted by heating the plate at 500°C. After the series of heat treatments, the clad plate was cold-formed into a clad steel pipe having an outer diameter of 500 mm and various properties were investigated for the base metal portions and the weld heat affected zones of the base metals. The results are shown in Table 2. Steels with base metals having chemical compositions that satisfy all of the claimed ranges of the present invention satisfy the target properties for both base metal portions and HAZ. In contrast, when the Mn content is outside the lower limit value of the claimed range, the strength and the DWTT properties of the base metal do not satisfy the target values. Moreover, when V, Nb, and Ti/N are outside the claimed ranges, the HAZ toughness does not satisfy the target value.

### [Table 1] Composition Table

**Table 1**

| Example No. | Steel No. | Chemical composition (unit: mass%) | | | | | | | | | | | | | | | Ti/N | Nb/C | Reference |
|---|---|---|---|---|---|---|---|---|---|---|---|---|---|---|---|---|---|---|---|
| | | C | Si | Mn | P | S | Ni | Cr | Cu | Mo | V | Al | Nb | Ti | N | Ca | | | |
| 1 | A1 | 0.065 | 0.23 | 1.55 | 0.008 | 0.0009 | 0.31 | 0.24 | 0.31 | 0.20 | 0.005 | 0.031 | 0.040 | 0.010 | 0.0038 | 0.0018 | 2.63 | 0.62 | Example |
| 2 | A2 | 0.066 | 0.29 | 1.28 | 0.010 | 0.0000 | 0.29 | 0.26 | 0.30 | 0.21 | 0.006 | 0.029 | 0.050 | 0.010 | 0.0041 | 0.0021 | 2.44 | 0.76 | Example |
| 3 | A3 | 0.063 | 0.28 | 1.28 | 0.005 | 0.0007 | 0.30 | 0.25 | 0.29 | 0.19 | 0.009 | 0.030 | 0.045 | 0.010 | 0.0039 | 0.0019 | 2.56 | 0.71 | Example |
| 4 | A4 | 0.068 | 0.30 | 1.28 | 0.007 | 0.0015 | 0.31 | 0.23 | 0.31 | 0.20 | 0.006 | 0.014 | 0.040 | 0.010 | 0.0044 | 0.0020 | 2.27 | 0.59 | Example |
| 5 | A5 | 0.065 | 0.21 | 1.54 | 0.009 | 0.0013 | 0.01 | 0.25 | 0.01 | 0.22 | 0.004 | 0.031 | 0.030 | 0.010 | 0.0037 | 0.0017 | 2.70 | 0.46 | Example |
| 6 | A6 | 0.066 | 0.25 | 1.53 | 0.010 | 0.0010 | 0.30 | 0.01 | 0.30 | 0.19 | 0.003 | 0.030 | 0.050 | 0.010 | 0.0040 | 0.0023 | 2.50 | 0.76 | Example |
| 7 | A7 | 0.085 | 0.24 | 1.55 | 0.007 | 0.0009 | 0.02 | 0.01 | 0.02 | 0.20 | 0.005 | 0.028 | 0.035 | 0.010 | 0.0035 | 0.0025 | 2.86 | 0.41 | Example |
| 8 | A8 | 0.065 | 0.28 | 1.54 | 0.008 | 0.0012 | 0.01 | 0.26 | 0.01 | 0.21 | 0.003 | 0.030 | 0.045 | 0.014 | 0.0040 | 0.0019 | 3.50 | 0.69 | Example |
| 9 | A9 | 0.063 | 0.22 | 1.55 | 0.010 | 0.0010 | 0.03 | 0.24 | 0.02 | 0.20 | 0.005 | 0.031 | 0.030 | 0.008 | 0.0040 | 0.0028 | 2.00 | 0.48 | Example |
| 10 | A10 | 0.050 | 0.23 | 1.52 | 0.006 | 0.0008 | 0.01 | 0.25 | 0.01 | 0.21 | 0.004 | 0.030 | 0.055 | 0.010 | 0.0040 | 0.0017 | 2.50 | 1.10 | Example |
| 11 | B1 | 0.035 | 0.18 | 1.28 | 0.007 | 0.0011 | 0.32 | 0.27 | 0.31 | 0.20 | 0.030 | 0.028 | 0.085 | 0.010 | 0.0038 | 0.0022 | 2.63 | 2.43 | Comparative Example |
| 12 | B2 | 0.067 | 0.22 | 0.91 | 0.010 | 0.0010 | 0.30 | 0.25 | 0.30 | 0.21 | 0.006 | 0.031 | 0.025 | 0.010 | 0.0041 | 0.0031 | 2.44 | 0.37 | Comparative Example |
| 13 | B3 | 0.064 | 0.25 | 1.56 | 0.009 | 0.0008 | 0.02 | 0.26 | 0.02 | 0.20 | 0.005 | 0.030 | 0.030 | 0.016 | 0.0040 | 0.0020 | 4.00 | 0.47 | Comparative Example |
| 14 | B4 | 0.065 | 0.27 | 1.54 | 0.010 | 0.0010 | 0.01 | 0.25 | 0.01 | 0.22 | 0.005 | 0.027 | 0.030 | 0.010 | 0.0052 | 0.0017 | 1.92 | 0.46 | Comparative Example |
| 15 | A11 | 0.067 | 0.29 | 1.59 | 0.010 | 0.0000 | 0.29 | 0.26 | 0.30 | 0.20 | 0.003 | 0.025 | 0.040 | 0.010 | 0.0037 | 0.0008 | 2.70 | 0.60 | Example |
| 16 | A12 | 0.067 | 0.30 | 1.55 | 0.007 | 0.0015 | 0.31 | 0.23 | 0.31 | 0.01 | 0.002 | 0.030 | 0.030 | 0.010 | 0.0040 | 0.0007 | 2.50 | 0.45 | Example |
| 17 | A13 | 0.065 | 0.29 | 1.55 | 0.008 | 0.0012 | 0.02 | 0.28 | 0.01 | 0.06 | 0.002 | 0.025 | 0.050 | 0.010 | 0.0035 | 0.0004 | 2.86 | 0.77 | Example |
| 18 | A14 | 0.063 | 0.22 | 1.55 | 0.010 | 0.0010 | 0.01 | 0.26 | 0.02 | 0.01 | 0.003 | 0.030 | 0.035 | 0.010 | 0.0040 | 0.0021 | 2.50 | 0.56 | Example |

| | | | | | | | | | | | | | | | | | | | |
|---|---|---|---|---|---|---|---|---|---|---|---|---|---|---|---|---|---|---|---|
| Note : Underlined items are outside the scope of the present invention. | | | | | | | | | | | | | | | | | | | |

### [Table 2] Base metal test results

**Table 2**

| Example No. | Steel No. | Base metal tensile properties | | | Base metal drop weight property | HAZ3mm (vE-20, J) | Reference |
|---|---|---|---|---|---|---|---|
| | | YS (Mpa) | TS (Mpa) | E1 (%) | DWTT -20°C SATT (%) | | |
| 1 | A1 | 533 | 646 | 26.0 | 100 | 265 | Example |
| 2 | A2 | 496 | 601 | 28.8 | 96 | 261 | Example |
| 3 | A3 | 495 | 600 | 28.9 | 95 | 196 | Example |
| 4 | A4 | 498 | 604 | 28.0 | 100 | 264 | Example |
| 5 | A5 | 501 | 607 | 27.7 | 91 | 264 | Example |
| 6 | A6 | 478 | 580 | 29.6 | 90 | 265 | Example |
| 7 | A7 | 462 | 561 | 31.1 | 86 | 266 | Example |
| 8 | A8 | 501 | 608 | 27.6 | 93 | 150 | Example |
| 9 | A9 | 499 | 605 | 27.9 | 94 | 148 | Example |
| 10 | A10 | 488 | 592 | 29.1 | 95 | 143 | Example |
| 11 | B1 | 500 | 606 | 27.8 | 91 | 70 | Comparative Example |
| 12 | B2 | 445 | 530 | 31.7 | 81 | 238 | Comparative Example |
| 13 | B3 | 501 | 608 | 27.7 | 91 | 68 | Comparative Example |
| 14 | B4 | 498 | 602 | 28.7 | 93 | 65 | Comparative Example |
| 15 | A11 | 518 | 620 | 26.5 | 95 | 195 | Example |
| 16 | A12 | 515 | 615 | 26.7 | 98 | 196 | Example |
| 17 | A13 | 488 | 591 | 29.0 | 95 | 198 | Example |
| 18 | A14 | 471 | 572 | 29.8 | 94 | 240 | Example |

| | | | | | | | |
|---|---|---|---|---|---|---|---|
| Note : Underlined items are outside the scope of the present invention. | | | | | | | |

## Claims

1. A base metal for a high-toughness clad plate having excellent toughness at a welded joint, the base metal consisting of, in terms of mass%, C: 0.030 to 0.10%, Si: 0.10 to 0.30%, Mn: 1.00 to 1.60%, P: 0.015% or less, S: 0.003% or less, V: less than 0.010%, Mo: 0.05 to 0.50%, Nb: 0.010 to 0.060%, Ti: 0.005 to 0.020%, N: 0.0030 to 0.0060% and at least one selected from Al: 0.040% or less and Ca: 0.0010 to 0.0040%, and optionally, at least one selected from Ni: 1.00% or less, Cr: 1.00% or less, and Cu: 1.00% or less, the balance being Fe and unavoidable impurities, wherein a percent ductile fracture is 85% or more in a -20°C DWTT test and vE-20°C is 100 J or more at a HAZ 3 mm position,
and wherein the ratio of the Ti content to the N content, Ti/N, is within the range of 2.0 to 3.5 and the ratio of the Nb content to the C content, Nb/C, is within the range of 0.2 to 2.0 where the element symbols represent contents of respective elements in terms of mass%.

2. The base metal for a high-toughness clad plate having excellent toughness at a welded joint according to Claim 1, wherein the base metal comprises, in terms of mass%, at least one selected from Ni: 1.00% or less, Cr: 1.00% or less, and Cu: 1.00% or less.

3. A method for manufacturing a clad plate having excellent toughness at a welded joint, comprising conducting clad rolling by using a steel material having the chemical composition described in Claim 1 and a cladding material, conducting a quenching treatment of heating the resulting clad-rolled plate to 900 to 1100°C, and then tempering the resulting quenched plate at a temperature lower than 550°C, wherein a base metal of the clad plate exhibits a percent ductile fracture of 85% or more in a -20°C DWTT test and vE-20°C of 100 J or more at a HAZ 3 mm position.

4. A clad plate comprising a base metal which is the base metal according to Claim 1.

## Patentansprüche

1. Basismetall für eine hochzähe Plattierungsplatte, die eine exzellente Zähigkeit an einer Schweißverbindung aufweist, wobei das Basismetall, in Bezug auf Massen%, aus C: 0,030 bis 0,10%, Si: 0,10 bis 0,30%, Mn: 1,00 bis 1,60%, P: 0,015% oder weniger, S: 0,003% oder weniger, V: weniger als 0,010%, Mo: 0,05 bis 0,50%, Nb: 0,010 bis 0,060%, Ti: 0,005 bis 0,020%, N: 0,0030 bis 0,0060% und zumindest einem ausgewählt aus Al: 0,040% oder weniger und Ca: 0,0010 bis 0,0040%, und optional zumindest einem ausgewählt aus Ni: 1,00% oder weniger, Cr: 1,00% oder weniger und Cu: 1,00% oder weniger und als Rest aus Fe und unvermeidbaren Verunreinigungen besteht, wobei ein Duktilbruch-Prozentwert in einem -20°C DWTT-Test 85% oder mehr beträgt und vE-20°C bei einer HAZ 3 mm Position 100 J oder mehr beträgt, und wobei das Verhältnis des Ti-Gehalts zum N-Gehalt, Ti/N, innerhalb des Bereiches von 2,0 bis 3,5 liegt, und das Verhältnis des Nb-Gehalts zum C-Gehalt, Nb/C, innerhalb des Bereiches von 0,2 bis 2,0 liegt, wobei die Elementsymbole die Gehalte der jeweiligen Elemente in Bezug auf Massen% darstellen.

2. Basismetall für eine hochzähe Plattierungsplatte, die eine exzellente Zähigkeit an einer Schweißverbindung aufweist, gemäß Anspruch 1, wobei das Basismetall, in Bezug auf Massen%, zumindest eines ausgewählt aus Ni: 1,00% oder weniger, Cr: 1,00% oder weniger und Cu: 1,00% oder weniger aufweist.

3. Verfahren zur Herstellung einer Plattierungsplatte, die eine exzellente Zähigkeit an einer Schweißverbindung aufweist, umfassend das Durchführen von Plattierungswalzen unter Verwendung eines Stahlmaterials, das die in Anspruch 1 beschriebene chemische Zusammensetzung aufweist, und eines Plattierungsmaterials, Durchführen einer Abschreckbehandlung des Aufheizens der resultierenden walzplattierten Platte auf 900 bis 1100°C und anschließend Tempern der resultierenden abgeschreckten Platte bei einer Temperatur niedriger als 550°C, wobei ein Basismetall der Plattierungsplatte einen Duktilbruch-Prozentwert in einem -20°C DWTT-Test von 85% oder mehr und vE-20°C bei einer HAZ 3 mm Position von 100 J oder mehr aufweist.

4. Plattierungsplatte, umfassend ein Basismetall, dass das Basismetall gemäß Anspruch 1 ist.

## Revendications

1. Métal de base pour une plaque de placage de haute ténacité ayant une excellente ténacité au niveau d'un joint soudé, le métal de base étant constitué en termes de % en masse, des éléments suivants, C : 0,030 à 0,10 %, Si : 0,10 à 0,30 %, Mn : 1,00 à 1,60 %, P : 0,015 % ou moins, S : 0,003 % ou moins, V : moins de 0,010 %, Mo : 0,05 à 0,50 %, Nb : 0,010 à 0,060 %, Ti : 0,005 à 0,020 %, N : 0,0030 à 0,0060 % et d'au moins un choisi parmi Al : 0,040 % ou moins et Ca : 0,0010 à 0,0040 % et éventuellement d'au moins un choisi parmi Ni: 1,00 % ou moins, Cr: 1,00 % ou moins et Cu : 1,00 % ou moins, le restant étant constitué de Fe et d'impuretés inévitables, dans lequel un pourcentage de cassure ductile est de 85 % ou plus dans un essai DWTT à -20 °C et le vE-20 °C est de 100 J ou plus dans une position de 3 mm de HAZ (zone affectée par la chaleur),
et dans lequel le rapport Ti/N de la teneur en Ti à la teneur en N se situe dans la plage de 2,0 à 3,5 et le rapport Nb/C de la teneur en Nb à la teneur en C se situe dans la plage de 0,2 à 2,0, où les symboles d'éléments représentent des teneurs d'éléments respectifs en termes de % en masse.

2. Métal de base pour une plaque de placage de haute ténacité ayant une excellente ténacité au niveau d'un joint soudé selon la revendication 1, dans lequel le métal de base comprend, en termes de % en masse, au moins un élément choisi parmi Ni : 1,00 % ou moins, Cr : 1,00 % ou moins et Cu : 1,00 % ou moins.

3. Procédé de fabrication d'une plaque de placage ayant une excellente ténacité au niveau d'un joint soudé, comprenant la réalisation d'un laminage de placage en utilisant un matériau de type acier ayant la composition chimique décrite dans la revendication 1 et un matériau de placage, la réalisation d'un traitement de trempe en chauffant la plaque obtenue à placage laminé à 900 à 1100 °C et en faisant ensuite revenir la plaque trempée obtenue à une température inférieure à 550 °C, dans lequel un métal de base de la plaque de placage présente un pourcentage de cassure ductile de 85 % ou plus dans un essai DWTT à -20 °C et un vE-20 °C de 100 J ou plus dans une position de 3 mm de HAZ.

4. Plaque de placage comprenant un métal de base qui est le métal de base selon la revendication 1.
